# EUROPÄISCHE PATENTSCHRIFT

(11) **EP 2 675 114 B1**
(45) Veröffentlichungstag und Bekanntmachung des Hinweises auf die Patenterteilung: **19.09.2018**
(21) Anmeldenummer: 13165886.6
(22) Anmeldetag: 30.04.2013
(51) Int. Cl.: H04L 12/42

(54) **VERFAHREN ZUM BETREIBEN EINER NETZWERKANORDNUNG, NETZWERKEINRICHTUNG UND EINER NETZWERKANORDNUNG**
METHOD FOR OPERATING A NETWORK FORMATION, A NETWORK ARRANGEMENT AND A NETWORK FORMATION
PROCÉDÉ POUR EXPOITER UNE FORMATION DE RÉSEAU , UN ARRANGEMENT DE RÉSEAU ET UNE FORMATION DE RÉSEAU

(30) Priorität: 15.06.2012 DE 102012210126
(43) Veröffentlichungstag der Anmeldung: 18.12.2013
(73) Patentinhaber: Siemens Aktiengesellschaft, 80333 München (DE)
(72) Erfinder: Zirkler, Andreas, Dr., 81671 München (DE); Riedl, Johannes, Dr., 84030 Ergolding (DE); Armbruster, Michael, Dr., 81825 München (DE); Fiege, Ludger, Dr., 85567 Grafing (DE); Schmid, Thomas, 72622 Nürtingen (DE)

(56) Entgegenhaltungen:
- EP-A1- 2 410 697
- DE-A1-102006 021 930
- DE-A1-102010 027 167
- DAVID GUNZINGER ET AL: "Optimising PROFINET IRT for fast cycle times: A proof of concept", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 35-42, XP031732754, ISBN: 978-1-4244-5460-0

## Beschreibung

Die vorliegende Erfindung betrifft ein Verfahren zum Betreiben einer Netzwerkanordnung mit Netzwerkeinrichtungen. Netzwerkeinrichtungen oder Netzwerkknoten werden in Kommunikationsnetzwerken verbaut und können beispielsweise Sensordaten oder Steuerdaten erzeugen und verarbeiten.

Bei besonders sicherheitsrelevanten Netzwerken, wie beispielsweise in Automatisierungsanlagen oder neuerdings auch Anwendungen im automobilen Fahrzeugbereich, müssen auch bei potenziellen Fehlern von Hardware-Komponenten oder Übertragungswegen besonders sicherheitsrelevante Daten weiterhin übertragen werden.

Bei echtzeitfähigen Systemen werden beispielsweise synchronisierte Kommunikationssysteme eingesetzt, die z.B. AFDX (Avionics Full Duplex Switched Ethernet), TTEthernet bei Flugzeuganwendungen oder z.B. Profinet IRT (Isochronous Real Time) in Automatisierungsnetzwerken verwenden. Hochpriore Daten werden dabei in einem vorgegebenen Zeitschlitz zwischen den Netzwerkknoten ausgetauscht. Dabei ist eine hochgenaue Synchronisierung der Netzwerkteilnehmer untereinander notwendig. Bei einer fehlerhaften Synchronisation werden auch hochpriore Nachrichten nicht behandelt und können zu einem Ausfall des Kommunikationssystems führen. Um entsprechenden Synchronisationsfehlern vorzubeugen und ein sicheres Netzwerk bereitzustellen, sind häufig redundante Kommunikationssysteme mit unterschiedlichen Synchronisationsmechanismen eingesetzt. Dies führt zu einem in der Regel erhöhten Verkabelungs- und Hardware-Aufwand.

Insofern ist es wünschenswert, insbesondere für sicherheitsrelevante Netzwerkanwendungen, einen Netzwerkbetrieb und Netzwerkeinrichtungen bereitzustellen, der auch bei Synchronisierungsschwierigkeiten zuverlässig ihre Aufgabe vollzieht.

David Gunzinger et al., "OPTIMISING PROFINET IRT for fast cycle times: A proof of concept" offenbart eine Evaluierung des PROFINET-Standards.

Es ist daher eine Aufgabe der vorliegenden Erfindung, eine verbessertes Verfahren zum Betreiben einer Netzwerkanordnung, eine verbesserte Netzwerkeinrichtung und/oder Netzwerkanordnung bereitzustellen.

Daher wird ein Verfahren zum Betreiben einer Netzwerkanordnung mit mehreren Netzwerkeinrichtungen vorgeschlagen, welche insbesondere ringförmig miteinander kommunikativ gekoppelt sind. Dabei werden Daten einer ersten Klasse in mindestens einem für alle Netzwerkeinrichtungen gleichen vorgegebenen Zeitschlitz übertragen. Eine Netzwerkeinrichtung, welche während des vorgegebenen Zeitschlitzes Daten anderer Klassen empfängt, leitet zumindest vorübergehend, beispielsweise über einen vorgegebenen Zeitabschnitt, ausschließlich Daten der ersten Klasse weiter oder versendet diese. Ferner umfasst das Verfahren in mindestens einer Netzwerkeinrichtung den Schritt: Prüfen oder Überwachen, ob während des vorgegebenen Zeitschlitzes andere als Daten der ersten Klasse eintreffen oder empfangen werden. Beispielsweise können die nach einem vorgegebenen Standard mit einer Markierung versehenen Datenpakete von der empfangenen Netzwerkeinrichtung in ihre Klasse eingeordnet werden. Vorzugsweise umfasst das Verfahren dann ferner, dass in mindestens einer Netzwerkeinrichtung, falls in einem Zeitabschnitt des vorgegebenen Zeitschlitzes mehr als eine vorgegebene Anzahl anderer Daten als Daten der ersten Klasse empfangen werden, ein Weiterleiten der anderen Daten blockiert wird und ausschließlich Daten der ersten Klasse gesendet werden.

Bei vollduplexen Kommunikationssystemen, die ringförmig ausgebildet sind, ergeben sich beispielsweise zwei mögliche Kommunikationspfade im Ring mit entgegengesetzter Kommunikationsrichtung. Die Daten erster Klasse, beispielsweise, d.h. besonders sicherheitsrelevante Daten, die vitale Funktionen in der Netzwerkanordnung betreffen, werden in dem vorgegebenen Zeitschlitz übertragen. D.h., in der Art eines Zeitscheibenverfahrens oder Round-Robins werden hochpriore Daten der ersten Klasse ausgetauscht, wobei der Zeitpunkt des Eintreffens entsprechender Datenpakete in möglichst allen Netzwerkeinrichtungen synchron ist. Ein dezidierter Kommunikationspfad oder Sendekanal wird also für die Dauer des den Zeitschlitzes freigehalten, so dass viele vitale Daten bzw. Daten der ersten Klasse übertragen werden können. Daten werden auch als Nachrichten, Datenpakete oder Rahmen, die einen Dateninhalt tragen, bezeichnet.

Übrige Daten, die nicht der ersten Klasse zugeordnet sind, beinhalten beispielsweise nicht-vitale Daten, die nicht die Funktion der Netzwerkeinrichtung oder das Netzwerk vital betreffen.

Während des vorgegebenen Zeitschlitzes werden die Daten der ersten Klasse vorzugsweise taktsynchron zwischen den Netzwerkeinrichtungen übertragen. Die vorgegebenen Daten der ersten Klasse können insbesondere mit einer Klassenmarkierung, wie beispielsweise nach einem IEEE 802.1p-Standard, versehen werden. Insofern ist es möglich, dass an jeder Netzwerkeinrichtung erkannt wird, dass die Daten der ersten Klasse und anderer Klassen eintreffen.

Man kann auch davon sprechend, dass die Netzwerkanordnung bzw. die Netzwerkeinrichtungen in einem Auffangmodus, einem Fehlerbehebungsmodus oder Ersatzmodus betrieben werden, wenn Synchronisationsprobleme auftreten.

Bei dem Verfahren werden beispielsweise während des vorgegebenen Zeitschlitzes ausschließlich Daten der ersten Klasse insbesondere taktsynchron ausgetauscht.

Außerhalb des Zeitschlitzes können auch nicht-taktsynchrone Datenübertragungen vorgenommen werden. Beispielsweise kann dann eine Datenübertragung nach einem konventionellen Ethernet-Scheduling erfolgen. Für eine taktsynchrone Übertragung innerhalb des Netzwerkes, also vorzugsweise an oder in allen Netzwerkeinrichtungen, können bekannte Verfahren der Taktrückgewinnung eingesetzt werden. Dabei ist denkbar, dass ein einziger Master-Takt, Master-Clock oder eine globale Zeit eingerichtet werden.

Die Implementierung der Netzwerkanordnung und das Verfahren zum Betreiben derselben können insbesondere auf der Basis eines Profinet-Standards erfolgen. Profinet (Process Field Network) wird in Automatisierungsnetzwerken eingesetzt. Dabei sind beispielsweise taktsynchrone Kommunikationen (IRT) als Realtime-Datenübertragung möglich, wie auch ein Datenaustausch in Real Time ohne Taktsynchronizität, der als RT bezeichnet wird. Beispielsweise kann nach einem Protokoll für Profinet IO während des vorgegebenen Zeitschlitzes eine IRT-Übertragung vorgenommen werden, während in den anderen Zeitbereichen ein einfaches RT-Protokoll für Profinet CBA oder Profinet IO Anwendung findet.

In Ausführungsformen des Verfahrens werden Synchronisierungsnachrichten zum Abgleichen des vorgegebenen Zeitschlitzes und/oder eines Taktes in allen Netzwerkeinrichtungen versendet.

Wird beispielsweise bei einer Netzwerkeinrichtung erkannt, dass innerhalb des von ihr erfassten Zeitschlitzes Daten anderer Klassen empfangen werden, ist eine Synchronisationsstörung detektierbar. Dies kann an einer globalen Störung liegen oder einer lokalen der einzelnen Netzwerkeinrichtung. Erkennt die Netzwerkeinrichtung dieses, sendet sie zumindest vorübergehend ausschließlich die Daten der höchsten Priorität also der ersten Klasse in Standard-Telegrammen der Klasse 2. Vorübergehend kann dabei über einen vorgegebenen programmierbaren Zeitraum bedeuten. Beispielsweise erfolgt die Datenübertragung solange abweichend von der taktsynchronen Übertragung und abweichend dem regulären Zeitschlitzverfahren bis eine Reparatur der Synchronität vollzogen ist. Damit wird gewährleistet, dass die hochprioren Daten der ersten Klasse trotz Synchronisierungsschwierigkeiten von den übrigen Netzwerkteilnehmern, also Netzwerkeinrichtungen oder Knoten, empfangen werden. Damit ist gewährleistet, dass trotz Synchronisierungsunregelmäßigkeiten die vitalen Daten zuverlässig im Netzwerk vorliegen.

Da bei Synchronisierungsstörungen der vorgegebene Zeitschlitz an einer fehlerhaften Netzwerkeinrichtung gegenüber dem Mastertakt verschoben sein kann und damit nicht synchron mit den übrigen in der Netzwerkanordnung vorliegenden Netzwerkeinrichtungen ist, markiert bzw. degradiert sich beispielsweise die Netzwerkeinrichtung, welche erkannt hat, dass sie unpassende, also andere Daten als zur ersten Klasse gehörend während des Zeitschlitzes empfängt. Die betroffene Netzwerkeinrichtung kann auch in einen Modus gebracht werden, in dem sie nur noch die Daten der ersten Klasse empfängt, sendet und weiterleitet, dieses aber in Standard-Telegrammen der Klasse 2. Im Netzwerk kann der jeweilige Gesundheitszustand, also ob eine Netzwerkeinrichtung zuverlässig die vorgesehene synchrone und gemäß vorgegebenem Zeitschlitzverfahren vorgesehenen Übertragungen von Daten der verschiedenen Klassen vollzieht erfasst und bereitgestellt werden. Die Gesundheitsdaten werden zum Beispiel verteilt in den Netzwerkeinrichtungen abgespeichert.

Vorzugsweise werden die Schritte des Prüfens oder Überwachens, des Blockierens und des Sendens in allen Netzwerkeinrichtungen des Netzwerks durchgeführt. Für den Fall, dass alle im Netzwerk vorgesehenen Netzwerkeinrichtungen diese Maßnahme bei potenziellen Synchronisierungsstörungen durchführen, ergibt sich ein Fail-Operational-Betrieb auch bei Störungen, denn die Übertragung der vitalen Daten, welche der ersten Klasse zugeordnet sind, erfolgt dann von allen Netzwerkeinrichtungen weiter, jetzt aber in Standard-Telegrammen der Klasse 2. Non-vitale Daten der Klasse 2 werden in diesem Betriebszustand nicht mehr übertragen. Die Übertragung kann nach üblichen Ethernet- oder Profinet-Scheduling-Verfahren erfolgen.

Ausführungsformen des Verfahrens umfassen weiterhin: in mindestens einer Netzwerkeinrichtung, Prüfen oder Überwachen, ob Daten der ersten Klasse von einer benachbarten Netzwerkeinrichtung taktsynchron empfangen werden; und falls Daten der ersten Klasse von einer benachbarten Netzwerkeinrichtung nicht taktsynchron eintreffen, insbesondere während Daten der ersten Klasse von anderen Netzwerkeinrichtungen taktsynchron eintreffen, Klassifizieren der benachbarten Netzwerkeinrichtung als fehlerhaft.

Bei vorzugsweise taktsynchroner Übertragung während der Zeitschlitze für die hochprioren Daten signalisiert ein nichttaktsynchroner Empfang von Daten der ersten Klasse, dass beispielsweise eine andere Netzwerkeinrichtung fehlerhaft agiert. Prüfen alle Netzwerkeinrichtungen, welche ringförmig angeordnet sind, die Klassenzugehörigkeit von nichttaktsynchron oder taktsynchron empfangenen Daten, kann die jeweilige fehlerhafte Netzwerkeinrichtung eruiert werden und entsprechend eingeordnet oder klassifiziert werden. Dadurch können entsprechende Fehlerbehebungsmaßnahmen eingeleitet werden.

Es ist auch denkbar, verschiedene Prioritäten oder Klassen für die Daten vorzusehen. Je nach Belastungszustand des Netzwerkes können beispielsweise Daten bestimmter Prioritätsklassen auch bei einer fehlerhaften Synchronisierungen noch übertragen werden.

Vorzugsweise erfolgt das Prüfen oder Überwachen und Klassifizieren in Abhängigkeit von einem taktsynchronen oder nichttaktsynchronen Empfang von Daten erster Klasse in allen Netzwerkeinrichtungen.

Es wird ferner eine Netzwerkeinrichtung vorgeschlagen, welche eingerichtet ist, ein wie vorbeschriebenes Verfahren durchzuführen.

Die Netzwerkeinrichtung kann beispielsweise Teil eines Feldgeräts für ein Automatisierungsnetzwerk sein. Es ist jedoch auch denkbar, dass die Netzwerkeinrichtungen als Sensoreinrichtung oder Aktoreinrichtung zum Betreiben eines Fahrzeugs ausgestaltet sind.

Die Netzwerkeinrichtung umfasst dabei vorzugsweise eine Steuereinrichtung, wie einen Mikrocontroller, und eine Switch-Einrichtung, welche geeignet ist, insbesondere an eine Ethernet-Struktur zu koppeln. Durch eine ringförmige Zusammenschaltung entsprechender Netzwerkeinrichtungen ergeben sich zwei ringförmige Kommunikationspfade mit entgegengesetzter Richtung. Es ist auch möglich, die Netzwerkeinrichtungen redundant auszugestalten, d.h. eine Netzwerkeinrichtung umfasst dann ein Paar von jeweils einer Steuereinrichtung und einer Switch-Einrichtung.

In Ausführungsformen der Netzwerkeinrichtung ist die Switch-Einrichtung und/oder der Mikrocontroller als FPGA, ASIC, IC-Chip oder festverdrahteter Mikroschaltkreis ausgeführt.

Die Netzwerkeinrichtung, die auch als Netzwerkknoten oder Netzelement bezeichnet werden kann, hat insbesondere zwei Switch-Einrichtungen, die unabhängig voneinander ausgeführt sind und jeweils für eine Ringrichtung switchen. Als Steuereinrichtung kommt beispielsweise eine CPU, ein Mikroprozessor oder auch ein anderer programmierbarer Schaltkreis in Frage. Als Steuereinrichtung kann ferner eine Sensoreinrichtung verstanden werden.

Die Netzwerkeinrichtung ist insbesondere eingerichtet, nach einem Ethernet-Protokoll zu arbeiten. Ethernet-Protokolle sind weit verbreitet und lassen sich beispielsweise flexibel in Automatisierungsnetzwerke implementieren oder auch neuerdings in Fahrzeugen einsetzen. Denkbar sind entsprechende Kommunikationsnetzwerke und Netzwerkeinrichtungen, beispielsweise zum Steuern eines Motors, einer Bremse oder anderen technischen Geräten, die in einem Fahrzeug vorgesehen sind.

Es wird ferner eine Netzwerkanordnung vorgeschlagen, welche mehrere Netzwerkeinrichtungen umfasst und welche eingerichtet ist, ein wie vorher beschriebenes Verfahren durchzuführen. Die Netzwerkeinrichtungen haben beispielsweise Kommunikationsschnittstellen, welche zu einer Ringstruktur gekoppelt sind.

Denkbar ist beispielsweise ein Ethernet-Netzwerk, welches Teil eines Kraftfahrzeugs ist. Die Netzwerkanordnung eignet sich insbesondere zum Einsatz in einem Fahrzeug, wobei die Steuereinrichtungen Sensor- und oder Aktoreinrichtungen sind. Als Sensoreinrichtungen sind Drehzahlsensoren, Brems- oder Schaltsteuerungseinrichtungen denkbar. Es sind auch Steuereinrichtungen denkbar, die ein Drive-by-Wire ermöglichen. Insgesamt ergibt sich eine besonders zuverlässige Netzwerkanordnung, in der Synchronisationsstörungen von Kommunikationskanälen sicher aufgefangen werden. Durch das vorgegebene Fehlerverhalten beim Empfang unerwarteter Daten kann ein fail-operational Betrieb gewährleistet werden.

Weiterhin wird ein Computerprogrammprodukt vorgeschlagen, welches auf einer oder mehreren programmgesteuerten Einrichtungen die Durchführung des wie oben erläuterten Verfahrens zum Betreiben einer Netzwerkanordnung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in Frage.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordndung, der Netzwerkeinrichtung oder eines Netzwerk-Knotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Figur 1: eine schematische Darstellung einer Ausführungsform einer Netzwerkanordnung zum Erläutern von Verfahrenaspekten zum Betrieb desselben;
- Figur 2: eine schematische Darstellung eines ZeitscheibenSchedulings;
- Figur 3: eine schematische Darstellung von synchroner Datenübertragung ausgewählter Daten; und
- Figur 4: eine schematische Darstellung von gestörter synchroner Datenübertragung an einer Netzwerkeinrichtung.

In den Figuren sind gleiche oder funktionsgleiche Elemente mit denselben Bezugszeichen versehen worden, sofern nichts anderes angegeben ist.

Im Folgenden wird eine Ausführungsform einer Netzwerkanordnung mit mehreren Netzwerkeinrichtungen sowie ein Verfahren zum Betreiben derselben mit einem insbesondere synchronen Datenaustausch in einem Zeitschlitzverfahren erläutert.

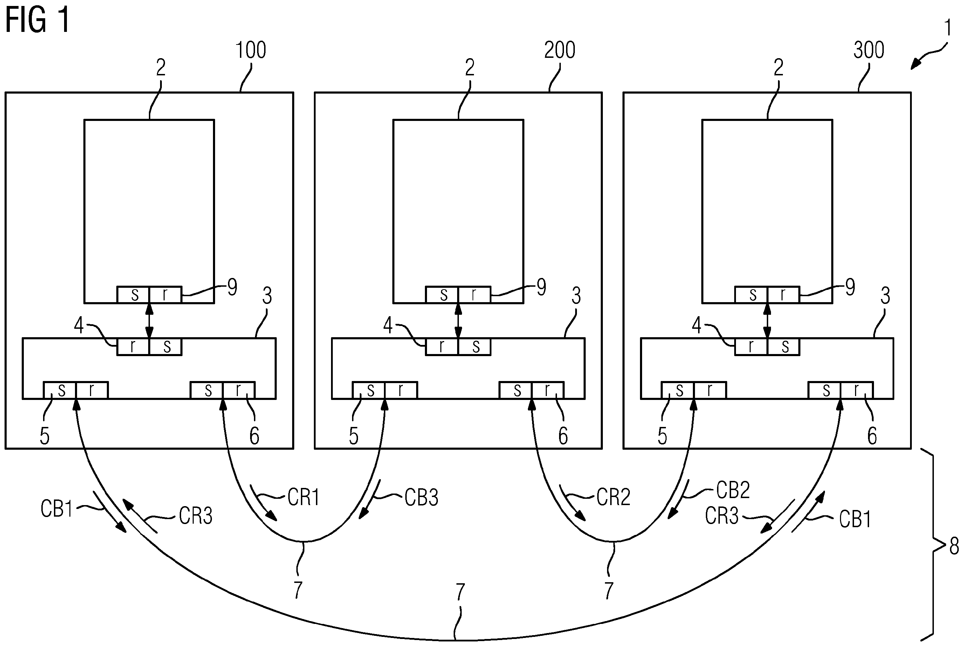

Die Fig. 1 zeigt eine schematische Darstellung einer Netzwerkanordnung, die beispielsweise für einen Profinet-Standard ausgestaltet ist. Die Fig. 1 zeigt eine Netzwerkanordnung 1 mit drei Netzwerkeinrichtungen 100, 200, 300. Die Netzwerkeinrichtungen können dabei beispielsweise Sensor-, Aktor- oder Steuereinrichtungen für den Betrieb eines Fahrzeugs oder anderer Verkehrsmittel sein. Denkbar ist jedoch auch die Ausbildung eines Automatisierungsnetzwerks mit Feldgeräten als Netzwerkeinrichtungen.

Jede Netzwerkeinrichtung 100, 200, 300 hat dabei eine Steuereinrichtung 2, die beispielsweise als Mikrocontroller oder Prozessor ausgestaltet ist. Ferner ist zum Koppeln an die Netzwerkinfrastruktur, beispielsweise eine Verkabelung 8, jeweils einer Switch-Einrichtung 3 vorgesehen. Dabei hat die Steuereinrichtung 2 mindestens einen Port 9, der zum Koppeln an einen Switch-Port 4 geeignet ist. Es ist jeweils beispielhaft nur ein Port 9 dargestellt, wobei die Datenkommunikation auch über ein Bussystem oder andere interne Kommunikationsmittel erfolgen kann. Lediglich beispielhaft ist der Port 9 mit jeweils einem Sende-(S) und einem Empfangs-(R)Anschluss dargestellt.

Die Switch-Einrichtung 3 hat weitere Ports 5, 6, die zum Ankoppeln an physikalische Übertragungsmedien, wie Netzwerkkabel 7, geeignet sind. Die drei gleichartig aufgebauten Netzwerkeinrichtungen 100, 200, 300 sind in einer Ringstruktur miteinander gekoppelt. Es kann beispielsweise ein vollduplexfähiges Übertragungsprotokoll verwendet werden, wie es das Ethernet bereitstellt. Es sind beispielsweise Kabel 7 angedeutet, welche die drei Netzwerkeinrichtungen 100, 200, 300 an den Ports 5, 6 der Switch-Einrichtungen 3 in einem Ringschluss miteinander verkoppeln.

Insbesondere bei Vollduplex-Kommunikationsprotokollen ergibt sich damit ein erster Ringschluss von beispielsweise Sendedaten, die in einer ersten Ringrichtung entlang der Pfeile CB1, CB2, CB3 verlaufen. Dieser erste Kommunikationspfad verläuft vom Switch-Port 5 der Switch-Einrichtung 3 der ersten Netzwerkeinrichtung zum Switch-Port 6 der Switch-Einrichtung 3 der dritten Netzwerkeinrichtung 300 (Segment CB1), vom Switch-Port 5 der Switch-Einrichtung 3 der dritten Netzwerkeinrichtung 300 zum Switch-Port 6 der Switch-Einrichtung 3 der zweiten Netzwerkeinrichtung 200 (Segment CB2) und vom Switch-Port 5 der Switch-Einrichtung 3 der zweiten Netzwerkeinrichtung 200 zum Switch-Port 6 der Switch-Einrichtung 3 der ersten Netzwerkeinrichtung (Segment CB3). Bei dieser gerichteten Kommunikation kann die Kommunikationsrichtung über den Datenpfad entgegen dem Uhrzeigersinn in der Darstellung der Fig. 1 erfolgen.

Analog ergibt sich über dieselbe Verkabelung 7 ein entgegengesetzt gerichteter Kommunikationspfad aus den Segmenten CR1, CR2, CR3. Die Ringrichtung entspricht dabei dem Uhrzeigersinn in der Darstellung der Fig. 1. Insofern lassen sich zwei getrennte Kommunikationspfade erstellen.

Um besonders sicherheitsrelevante Daten in dem Kommunikationsnetzwerk 1, beispielsweise Sensordaten oder Steuerdaten für vitale Einrichtungen in einem Kraftfahrzeugnetzwerk sicher und zuverlässig zu verteilen, wird die Netzwerkanordnung 1 mit einem Zeitscheibenverfahren betrieben. D.h., die zu übertragenden Daten werden Klassen zugeordnet und zu vorgegebenen Zeiten im Netz übertragen. Beispielsweise gibt es eine erste Klasse von Daten, die besonders sicherheitsrelevant sind. Diese Daten der ersten Klasse müssen auch bei Netzwerkschwierigkeiten zuverlässig an allen Netzwerkeinrichtungen 100, 200, 300 vorliegen. Insofern wird für vorgegebene Zeitschlitze ZS eine taktsynchrone Datenübertragung der wichtigen vitalen Datenpakete vollzogen.

Eine Taktsynchronisierung kann dabei über Synchronisationsnachrichten im Netzwerk erzielt werden. Es z.B. denkbar, dass ein Takt-Master vorgesehen wird, der eine für alle Netzwerkeinrichtungen im Netzwerk 1 maßgebliche Taktung vorgibt. Eine Taktrückgewinnung kann beispielsweise mit Hilfe der empfangenen Synchronisationsnachrichten an den jeweiligen Empfangsports erfolgen.

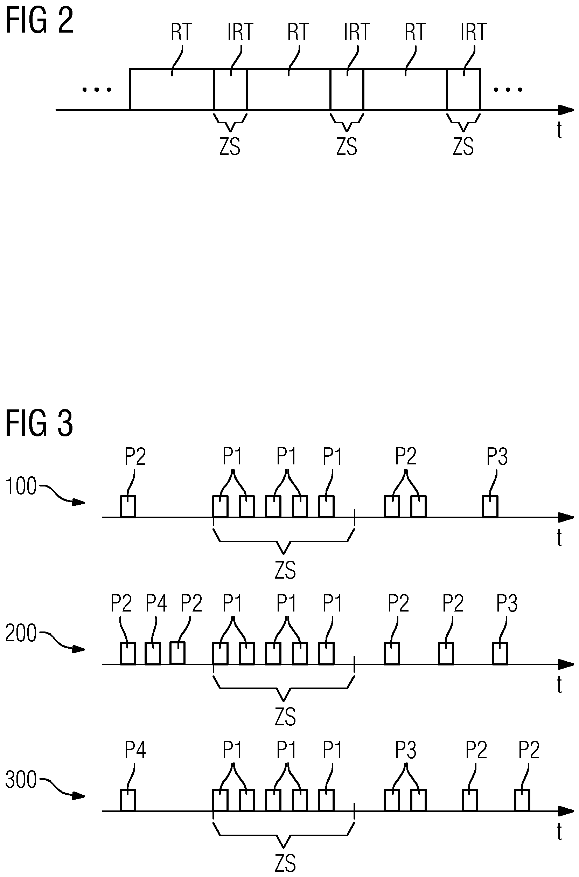

In der Fig. 2 ist beispielhaft ein Zeitscheiben-Scheduling angedeutet. Auf der Achse t ist die Zeit aufgetragen. Es sind dabei Zeitabschnitte vorgesehen, in denen beispielsweise im Rahmen eines Profinets Realtime-Übertragung RT vorgenommen wird, die nicht notwendigerweise taktsynchron erfolgt. Während vorgegebener Zeitfenster oder Zeitschlitze ZS übertragen die Netzwerkeinrichtungen 100, 200, 300 jedoch die Daten der ersten Klasse mit der höchsten Priorität in einem taktsynchronen Verfahren. Dies kann insbesondere bei Anwendung eines Profinet-Protokolls das IRT-Protokoll sein. Die Zykluszeiten liegen dabei zum Beispiel in Profinet-Umgebungen bei weniger als 1 ms für den Takt. Insofern werden hochpriore Daten, beispielsweise vitale Steuerdaten für ein Drive-by-Wire oder besonders zeitkritische Datenpakete, der ersten Klasse zugeordnet und synchron im Netzwerk 1 an die Netzwerkeinrichtungen 100, 200, 300 verteilt. Andere niederklassige Daten, wie beispielsweise Infotainment-Daten, die ebenfalls über das Netzwerk 1 übertragen werden, können während der übrigen Zeiten in einem normalen Realtime-Verfahren oder einem Best-Effort-Verfahren übertragen werden.

Bei ungestörter Synchronisation, die in der Fig. 3 angedeutet ist, senden beispielsweise die Netzwerkeinrichtung 100 (oberer Zeitstrahl) und die anderen Netzwerkeinrichtungen 200, 300 (unterer Zeitstrahl) während dem synchronen Zeitfenster ZS Datenpakete P1 einer ersten hochprioren Klasse. Man erkennt, dass die Datenpakete P1 taktsynchron an den Netzwerkeinrichtungen 100, 200, 300 vorliegen. In den übrigen Zeiten können Datenpakete mit nicht-vitalen Daten oder niederklassigen Paketen P2, P3, P4 übertragen werden. Beispielsweise zeigt die Fig. 3 in dem oberen Zeitstrahl Datenpakete P2 und P3, die außerhalb des Zeitschlitzes ZS asynchron im Netzwerk verteilt werden. Der untere Zeitstrahl zeigt beispielsweise das Versenden und/oder Empfangen von Datenpaketen P2, P4, P3 an den Netzwerkeinrichtungen 200, 300 außerhalb des Zeitschlitzes ZS. Es ist möglich, die Daten P1 der höchsten Priorität weiter zu unterteilen. Also zum Beispiel Unterklassen P1a, P1b, P1c etc. in Abhängigkeit von der Relevanz für Vitalfunktionen des Netzwerks 1 zuzuweisen.

In den Zeiten außerhalb des Zeitschlitzes ist beispielsweise ein normales Ethernet-Scheduling für die Datenpakete denkbar. Beim Betreiben des Netzwerkes 1 werden die Datenpakete beispielsweise in Prioritätslevel oder Klassen eingeteilt. Geeignet ist z.B. eine Prioritätszuweisung nach dem IEEE 802.1p-Standard. Die besonders sicherheitsrelevanten Daten der ersten Klasse P1 erhalten dabei z.B. die PCP-Klasse (PCP = Priority Code Point) oder den Level 7. Es können jedoch auch weitere oder abweichende Klassenzuweisungen erfolgen.

Bei der Synchronisation der Netzwerkeinrichtungen 100, 200, 300 untereinander können prinzipiell Störungen auftreten, d.h. ein oder mehrere der Netzwerkeinrichtungen 100, 200, 300 sind nicht im Takt. Um dennoch einen Fail-Safe-Betrieb und insbesondere einen Fail-Operational-Betrieb des Netzwerkes 1 mit den sicherheitsrelevanten Daten der ersten Klasse zu gewährleisten, überwacht jede Netzwerkeinrichtung 100, 200, 300, ob in dem für sie erkannten vorgegebenen Zeitschlitz ZS taktsynchron Daten der ersten Klasse P1 eintreffen und außerhalb des Zeitschlitzes ZS keine Daten der ersten Klasse P1 eintreffen. Falls mindestens eine dieser Bedingungen für Daten von mindestens zwei verschiedenen Absendern, also Netzwerkeinrichtungen, verletzt ist, kann entweder die Netzwerkeinrichtung 100, 200, 300 selbst falsch synchronisiert sein, oder mindestens zwei andere im Netzwerk 1 vorliegende Netzwerkeinrichtungen 100, 200, 300 sind nicht korrekt synchronisiert. In diesem Fall kann die Schlussfolgerung gezogen werden, dass nicht eine einzelne der anderen Netzwerkeinrichtungen die Fehlerursache ist, sondern dass entweder die Fehlerursache lokal ist, d.h. die überwachende Netzwerkeinrichtung selbst defekt ist, oder global die Synchronisierung gestört ist. Eine Möglichkeit, dennoch die vitalen Daten P1 der ersten Klasse weiter zu versenden, besteht darin, dass die Netzwerkeinrichtung 100, 200, 300, welche erkannt hat, dass falsche, nicht erwartete Daten anderer Klassen P1, P2, P3, P4 empfangen werden, ausschließlich die vitalen Daten P1 in das Netzwerk 1 absetzt, jetzt aber in Standard-Telegrammen der Klasse 2. Nichtvitale Daten der Klassen 2 bis 4 werden in diesem Betriebszustand, der auch Auffangmodus, Fehlerbehebungsmodus oder Ersatzmodus bezeichnet werden kann, nicht mehr übertragen.

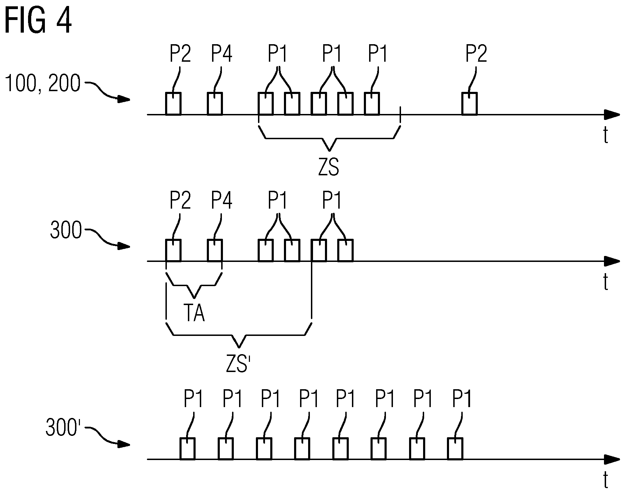

In einem besonders kritischen Fehlerfall reagieren alle Netzwerkeinrichtungen 100, 200, 300 entsprechend, so dass der vitale Datenverkehr mit Daten der Klasse P1 zuverlässig weiter vollzogen wird. Für den Fehlerfall, dass eine Netzwerkeinrichtung, beispielsweise die Netzwerkeinrichtung 300, einen Synchronisationsdefekt aufweist, sind in der Fig. 4 beispielhafte Datenübertragungen als Zeitstrahl angedeutet. Es wird davon ausgegangen, dass die Netzwerkeinrichtungen 100, 200, 300 wie in der Fig. 3 angedeutet ist, während des Zeitschlitzes ZS, der für alle Einrichtungen gleich ist, taktsynchron Daten der ersten Priorität bzw. Klasse P1 versenden. Außerhalb des Zeitschlitzes werden Daten anderer Priorität nicht notwendig taktsynchron übertragen.

Sofern nun beispielsweise die Netzwerkeinrichtung 300 eine falsche Synchronisation hat, d.h. der von ihr erkannte Zeitschlitz ZS' ist gegenüber dem tatsächlichen Mastertakt-Zeitschlitz ZS verschoben, erhält sie unerwartete Datenpakete. Dies ist in der mittleren Darstellung der Fig. 4 angedeutet. Insofern erkennt die Netzwerkeinrichtung 300, dass während des Zeitschlitzes ZS', der eigentlich der taktsynchronen Verteilung von Prioritätsdaten der ersten Klasse vorbehalten ist, auch Daten P2, P4 anderer Klassen empfangen werden. Beispielsweise wird an einer jeweiligen Netzwerkeinrichtung 300 über vorgegebene Zeitabschnitte TA gemessen, wie viele Datenpakete der ersten Klasse während des jeweiligen Zeitabschnitts TA eintreffen und wie viele der übrigen Klassen. Sofern das Verhältnis einen bestimmten Schwellwert von Daten von verschiedenen Quellen überschreitet, erkennt die entsprechende Netzwerkeinrichtung 300 den Fehler und schaltet in einen Fehlerbehebungsmodus. In der beispielhaften Darstellung der Figur 4 misst die Netzwerkeinrichtung 300, dass pro Zeitabschnitt TA zwei unerwartete Pakete P2 und P4 eintreffen und nicht, wie während eines korrekt synchronisierten Zeitschlitzes, nur vitale Daten P1. Es ist auch möglich, dass TA genauso lang ist wie ZS und in einer Netzwerkeinrichtung während der Dauer des (lokalen) Zeitschlitzes ZS, ZS' gezählt wird, wie viele nichtvitale Datenpakete eintreffen. Wird ein vorgegebener Schwellwert überschritten, wird ein Fehlerbehebungsmodus eingeleitet.

Bei dem Fehlerbehebungsmodus versendet die Netzwerkeinrichtung 300', wie in der Fig. 4 unten angedeutet ist, ausschließlich die vitalen Daten der ersten Klasse P1. Beispielsweise erfolgt dies als Profinet RT (Klasse-2-Paket) anstelle des taktsynchronen Profinet-IRT-Pakets. Die benachbarten Netzwerkeinrichtungen 100, 200 können dann insbesondere erkennen, dass die Netzwerkeinrichtung 300 nicht taktsynchron arbeitet und ausschließlich Daten P1 der ersten Klasse versendet. D.h., eine entsprechende Klassifizierung oder Statusinformation für die Netzwerkeinrichtung 300 kann im Netzwerk 1 bereitgehalten werden.

Als Maßnahme wird beispielsweise die Netzwerkeinrichtung 300 deaktiviert oder ihr werden nur noch mit nicht-vitale Funktionen zugewiesen. D.h., da die Synchronisation an der Netzwerkeinrichtung 300 fehlerhaft ist, wird sie nur noch mit Funktionen betraut, die von Daten der übrigen, nicht höchstprioren Klassen beschrieben werden.

Es ist auch denkbar, dass der Synchronisationsmechanismus vollständig ausgefallen ist. D.h., keine der Netzwerkeinrichtungen kann miteinander eine taktsynchrone Datenübertragung gewährleisten. Beispielsweise kann ein Synchronisationsmaster ausfallen bzw. unerkannt falsche Synchronisationsinformationen verteilen oder andere systematische Fehler in der Netzwerkstruktur auftreten. In diesem Fall erkennen alle Netzwerkeinrichtungen 100, 200, 300, dass keine Taktsynchronität während des Zeitschlitzes, den sie lokal erkannt haben, für die Daten P1 der ersten hochprioren Klasse vorliegt, deshalb wird jede Netzwerkeinrichtung 100, 200, 300 sich degradieren und ausschließlich Daten der ersten Klasse versenden jetzt aber in Standard-Telegrammen für Daten der Klasse 2 oder niedriger. Nichtvitale Daten der Klassen 2 bis 4 werden in diesem Betriebszustand nicht mehr übertragen. Durch den Verzicht auf die Übertragung der nichtvitalen Daten wird erreicht, dass die vitalen Daten trotz der fehlerhaften Synchronisation innerhalb eines deterministischen Zeitfensters durch das Netzwerk transportiert werden.

In diesem Fehlerbehebungsmodus kann das gesamte Netzwerk dennoch die vitalen Daten der ersten Prioritätsklasse P1 weiterleiten und verteilen. Ein Betrieb des zugrunde liegenden Systems, beispielsweise eines Fahrzeugs, ist damit nach wie vor sichergestellt. Es ist auch möglich, dass mehrere Gesundheitszustände den Netzwerkeinrichtungen zugeordnet werden. Beispielsweise kann eine als vollständig fehlerhaft erkannte Netzwerkeinrichtung, die keinerlei Synchronisation mehr vollziehen kann, nur noch mit einer Datenerzeugung oder Weiterleitung betraut werden, die niederpriore Daten, beispielsweise P4, verwendet. Eine eingeschränkte Funktionalität hinsichtlich der Datenerzeugung und Übertragung wird beispielsweise in Abhängigkeit von dem Gesundheitszustand festlegt.

Insgesamt ergibt sich trotz einer beliebigen Netzwerktopologie wegen der geeigneten Maßnahmen bei potenziell auftretenden Synchronisationsfehlern eine zuverlässige Übertragung von Daten hoher Priorität gegenüber Daten, die nicht vitale Inhalte haben. Das vorgeschlagene Verfahren und das Netzwerk lassen sich leicht implementieren und insbesondere auf Basis von Profinet-Protokollen oder auch anderen Ethernet-Abwandlungen realisieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben einer Netzwerkanordnung (1) mit mehreren Netzwerkeinrichtungen (100, 200, 300), welche miteinander kommunikativ gekoppelt sind, wobei Daten einer ersten Klasse in mindestens einem für alle Netzwerkeinrichtungen (100, 200, 300) gleichen vorgegebenen Zeitschlitz (ZS) übertragen werden, und mindestens eine Netzwerkeinrichtung (100, 200, 300), welche während des vorgegebenen Zeitschlitzes (ZS) Daten anderer Klassen empfängt, zumindest vorübergehend ausschließlich Daten der ersten Klasse versendet oder weiterleitet, ferner umfassend: in mindestens einer Netzwerkeinrichtung (100, 200, 300), Prüfen/Überwachen, ob Daten der ersten Klasse von einer benachbarten Netzwerkeinrichtung (100, 200, 300) taktsynchron empfangen werden, und falls Daten der ersten Klasse von einer einzigen benachbarten Netzwerkeinrichtung (100, 200, 300) nicht taktsynchron eintreffen, Klassifizieren der benachbarten Netzwerkeinrichtung (100, 200, 300) als fehlerhaft.

2. Verfahren nach Anspruch 1, wobei die Daten der ersten Klasse während des vorgegebenen Zeitschlitzes (ZS) taktsynchron zwischen den Netzwerkeinrichtungen (100, 200, 300) übertragen werden.

3. Verfahren nach Anspruch 1 oder 2, wobei die Daten der ersten Klasse ausschließlich während des vorgegebenen Zeitschlitzes (ZS) übertragen werden.

4. Verfahren nach einem der Ansprüche 1 - 3, wobei die vorgegebenen Daten der ersten Klasse mit einer Klassenmarkierung, insbesondere nach einem IEEE 802.1p-Standard, versehen werden.

5. Verfahren nach einem der Ansprüche 1 - 4, ferner umfassend: in mindestens einer Netzwerkeinrichtung (100, 200, 300), Prüfen ob während des vorgegebenen Zeitschlitzes (ZS) andere als Daten der ersten Klasse eintreffen.

6. Verfahren nach Anspruch 5, ferner umfassend: in mindestens einer Netzwerkeinrichtung (100, 200, 300), falls in einem Zeitabschnitt des vorgegebenen Zeitschlitzes (ZS) mehr als eine vorgegebene Anzahl anderer Daten als Daten der ersten Klasse, insbesondere von unterschiedlichen Netzwerkeinrichtungen , empfangen werden, Blockieren eines Weiterleitens der anderen Daten und Senden von ausschließlich Daten der ersten Klasse.

7. Verfahren nach Anspruch 6, wobei der Schritt des Prüfens, Blockierens und Sendens in allen Netzwerkeinrichtungen (100, 200, 300) durchgeführt wird.

8. Verfahren nach einem der Ansprüche 1 bis 7, wobei der Schritt des Prüfens und Klassifizierens in allen Netzwerkeinrichtung (100, 200, 300) durchgeführt wird.

9. Verfahren nach einem der Ansprüche 1 - 8, ferner umfassend: Versenden von Synchronisierungsnachrichten zum Abgleichen des vorgegebenen Zeitschlitzes in allen Netzwerkeinrichtungen (100, 200, 300).

10. Verfahren nach einem der Ansprüche 1 - 9, wobei Daten anderer Klassen außerhalb des vorgegebenen Zeitschlitzes (ZS) nach einem Ethernet-Scheduling übertragen werden.

11. Computerprogrammprodukt, welches die Durchführung eines Verfahrens nach einem der Ansprüche 1 - 10 auf einer oder mehrerer programmgesteuerter Einrichtungen (100, 200, 300) veranlasst.

12. Netzwerkeinrichtung (100, 200, 300), welche eingerichtet ist, ein Verfahren nach einem der Ansprüche 1 - 10 durchzuführen.

13. Netzwerkanordnung (1) mit mehreren Netzwerkeinrichtungen (100, 200, 300), welche insbesondere ringförmig miteinander kommunikativ gekoppelt sind, wobei die Netzwerkeinrichtungen (100, 200, 300), welche eingerichtet ist, ein Verfahren nach einem der Ansprüche 1 - 10 durchzuführen.

14. Netzwerkanordnung (101) nach Anspruch 13, **dadurch gekennzeichnet, dass** Netzwerkeinrichtungen (101) Sensoreinrichtungen oder Aktoreinrichtungen zum Betreiben eines Fahrzeugs sind.

## Claims

1. Method for operating a network arrangement (1) having a plurality of network systems (100, 200, 300), which are communicatively coupled to each other, wherein data belonging to a first class is transmitted in at least one specified time slot (ZS) identical for all network systems (100, 200, 300), and at least one network system (100, 200, 300), which during the specified time slot (ZS) receives data belonging to other classes, at least temporarily sends or forwards only data belonging to the first class, further comprising: in at least one network system (100, 200, 300), checking/monitoring whether data belonging to the first class is being synchronously received from an adjacent network system (100, 200, 300), and if data belonging to the first class does not synchronously arrive from a single adjacent network system (100, 200, 300), classifying the adjacent network system (100, 200, 300) as faulty.

2. Method according to claim 1, wherein the data belonging to the first class is synchronously transmitted between the network systems (100, 200, 300) during the specified time slot (ZS) .

3. Method according to claim 1 or 2, wherein the data belonging to the first class is transmitted only during the specified time slot (ZS).

4. Method according to one of claims 1 to 3, wherein the specified data belonging to the first class is provided with a class mark, in particular according to an IEEE 802.1p standard.

5. Method according to one of claims 1 to 4, also comprising: in at least one network system (100, 200, 300), checking as to whether data other than that belonging to the first class arrives during the specified time slot (ZS).

6. Method according to claim 5, also comprising: in at least one network system (100, 200, 300), if in a period of the specified time slot (ZS) more than a specified number of data other than data belonging to the first class, in particular from different network systems, is received, blocking forwarding of the other data and sending only data belonging to the first class.

7. Method according to claim 6, wherein the step of checking, blocking and sending is carried out in all network systems (100, 200, 300).

8. Method according to one of claims 1 to 7, wherein the step of checking and classifying is carried out in all network system (100, 200, 300).

9. Method according to one of claims 1 to 8, also comprising: sending synchronization messages for aligning the specified time slot in all network systems (100, 200, 300).

10. Method according to one of claims 1 to 9, wherein data belonging to other classes is transmitted outside of the specified time slot (ZS) according to Ethernet scheduling.

11. Computer program product which prompts the execution of a method according to one of claims 1 to 10 on one or more program-controlled systems (100, 200, 300).

12. Network system (100, 200, 300) which is configured to carry out a method according to one of claims 1 to 10.

13. Network arrangement (1) comprising a plurality of network systems (100, 200, 300), which are in particular annularly communicatively coupled to each other, wherein the network systems (100, 200, 300) which is configured to carry out a method according to one of claims 1 to 10.

14. Network arrangement (101) according to claim 13, **characterised in that** network systems (101) are sensor systems or actuator systems for operating a vehicle.

## Revendications

1. Procédé pour exploiter un agencement de réseau (1) comportant plusieurs équipements de réseau (100, 200, 300) reliés en communication l'un à l'autre, selon lequel des données d'une première classe sont transmises dans au moins une même tranche de temps (ZS) prédéterminée pour tous les équipements de réseau (100, 200, 300) et au moins un équipement de réseau (100, 200, 300), qui reçoit des données d'autres classes pendant la tranche de temps (ZS) prédéterminée, envoie ou transmet au moins temporairement uniquement des données de la première classe, le procédé comprenant en outre les étapes consistant à : contrôler/surveiller, dans au moins un équipement de réseau (100, 200, 300), si des données de première classe d'un équipement de réseau adjacent (100, 200, 300) sont reçues de façon isochrone et dans le cas où des données de première classe d'un équipement individuel de réseau adjacent (100, 200, 300) n'arrivent pas de façon isochrone, classifier l'équipement de réseau voisin (100, 200, 300) comme défaillant.

2. Procédé selon la revendication 1, dans lequel les données de la première classe sont transmises entre les équipements de réseau (100, 200, 300) de façon isochrone pendant la tranche de temps (ZS) prédéterminée.

3. Procédé selon la revendication 1 ou 2, dans lequel les données de la première classe sont transmises uniquement pendant la tranche de temps (ZS) prédéterminée.

4. Procédé selon l'une des revendications 1 à 3, dans lequel les données prédéterminées de la première classe sont dotées d'un marquage de classe, notamment selon le standard IEEE 802.1p.

5. Procédé selon l'une des revendications 1 à 4, comprenant en outre : dans au moins équipement de réseau (100, 200, 300) un contrôle si, pendant la tranche de temps (ZS) prédéterminée, d'autres données que celles de la première classe arrivent.

6. Procédé selon la revendication 5, comprenant en outre : dans au moins un équipement de réseau (100, 200, 300), dans le cas où, dans une période de la tranche de temps (ZS) prédéterminée, un nombre supérieur à un nombre prédéterminé de données autres que les données de la première classe sont reçues, notamment depuis différents équipements de réseau, le blocage d'une transmission des autres données et l'envoi uniquement de données de la première classe.

7. Procédé selon la revendication 6, dans lequel les étapes de contrôle, de blocage et d'envoi sont exécutées dans tous les équipements de réseau (100, 200, 300).

8. Procédé selon l'une des revendications 1 à 7, dans lequel les étapes de contrôle et de classification sont exécutées dans tous les équipements de réseau (100, 200, 300).

9. Procédé selon l'une des revendications 1 à 8, comprenant en outre l'envoi de messages de synchronisation pour ajuster la tranche de temps prédéterminée dans tous les équipements de réseau (100, 200, 300).

10. Procédé selon l'une des revendications 1 à 9, dans lequel des données des autres classes sont transmises en dehors de la tranche de temps (ZS) prédéterminée selon un ordonnancement d'Ethernet.

11. Produit de programme informatique qui initie l'exécution du procédé selon l'une des revendications 1 à 10 sur un ou plusieurs équipements commandés par programme (100, 200, 300) .

12. Équipement de réseau (100, 200, 300), qui est conçu pour exécuter un procédé selon l'une quelconque des revendications 1 à 10.

13. Agencement de réseau (1) comportant plusieurs équipements de réseau (100, 200, 300) reliés notamment en communication l'un à l'autre en anneau, et qui est conçu pour exécuter un procédé selon l'une des revendications 1 à 10.

14. Agencement de réseau (101) selon la revendication 13, **caractérisé en ce que** des équipements de réseau (101) sont des moyens de capteur ou des moyens d'actionneur destinés à faire fonctionner un véhicule.
